# EUROPÄISCHE PATENTSCHRIFT

(11) **EP 2 766 235 B1**
(45) Veröffentlichungstag und Bekanntmachung des Hinweises auf die Patenterteilung: **13.07.2016**
(21) Anmeldenummer: 12778042.7
(22) Anmeldetag: 10.10.2012
(51) Int. Cl.: B60W 10/06, B60W 10/20, B60W 10/18, B60W 30/18, B60W 50/029, B60W 50/035, B60W 50/038

(54) **FAHRZEUG UND VERFAHREN ZUM STEUERN EINES FAHRZEUGS**
VEHICLE AND METHOD FOR CONTROLLING A VEHICLE
VÉHICULE ET PROCÉDÉ DE COMMANDE D'UN VÉHICULE

(30) Priorität: 13.10.2011 DE 102011115854
(43) Veröffentlichungstag der Anmeldung: 20.08.2014
(73) Patentinhaber: Audi AG, 85045 Ingolstadt (DE)
(72) Erfinder: MÜLLER, Rolf, 64291 Darmstadt (DE)
(74) Vertreter: Brandt, Kai
(86) Internationale Anmeldenummer: PCT/EP2012/004242
(87) Internationale Veröffentlichungsnummer: WO 2013/053468

(56) Entgegenhaltungen:
- DE-A1- 10 357 922
- DE-A1-102005 022 680
- DE-A1-102009 050 399
- US-B2- 7 630 800

## Beschreibung

Die Erfindung betrifft ein Fahrzeug gemäß dem Oberbegriff von Patentanspruch 1 sowie ein Verfahren zum Steuern eines Fahrzeugs gemäß dem Oberbegriffs des Anspruchs 7.

Im Stand der Technik sind derartige Fahrzeuge und Verfahren beispielsweise von Kraftfahrzeugen bekannt, die ein Kombiinstrument mit Mikrocontroller und Kontrollleuchten umfassen, das einen Verfügbarkeitskoordinator im Sinne der Erfindung darstellt. Das Kombiinstrument ist als Steuergerät an einem Datenbus des Kraftfahrzeugs, beispielsweise einem CAN-Bus oder FlexRay-Bus, angebunden, um von den ebenfalls an den Datenbus angeschlossenen weiteren Steuergeräten, wie beispielsweise Motorsteuerung, Antiblockiersystem (ABS) und Elektronisches Stabilitätsprogramm (ESP), die für die mittels der Kontrollleuchten erfolgenden Anzeige der entsprechenden Betriebszustände notwendigen Daten einzusammeln. Der Ausfall oder eine Fehlfunktion oder eine eingeschränkte Funktionsfähigkeit bestimmter Systeme des Kraftfahrzeugs hat zur Konsequenz, dass der Fahrer über entsprechende Warnhinweise im Kombiinstrument, beispielsweise mittels rot aufleuchtender Kontrollleuchten, aufgefordert wird, das Fahrzeug abzustellen, beispielsweise bei Ausfall einer Elektrolenkung oder bei zu niedrigem Ölstand oder bei zu heißem Motor oder bei zu wenig Bremsflüssigkeit. Diese organisatorische Maßnahme ist zwingend erforderlich, da dem Fahrer ein sicheres Führen des Fahrzeugs nicht mehr möglich ist.

Aus der Druckschrift DE 103 57 922 A1 ist ein Verfahren zum Ansteuern von Stellern in Fahrzeugen bekannt, bei dem in einer Vielzahl von Fahrsystemen Signale erzeugt werden, welche einem Koordinator zugeführt werden. Der Koordinator erzeugt einerseits Steuersignale zum Ansteuern von Stellern und andererseits Rückmeldesignale, die an eine Rückmeldeeinrichtung zum Vermitteln von Informationen über den Fahrzustand des Fahrzeugs an den Fahrer übermittelt werden. Die erzeugten Steuersignale werden einem Regelungssystem zugeführt, welches die Steiler aufgrund der zugeführten Steuersignale ansteuert. Gemäß der Offenbarung sind die Fahrsysteme in wenigstens zwei Gruppen eingeteilt. Die Maßnahmen, die beim Auftreten eines Fehlers in einem Fahrsystem durchgeführt werden, werden dabei in Abhängigkeit der Zugehörigkeit des Fahrsystems zu einer der Gruppen bestimmt. Beim Auftreten eines Fehlers in einem der Fahrsysteme wird ein sicherer Zustand herbeigeführt und dann das entsprechende Fahrsystem außer Betrieb genommen. Der Fahrer wird hierüber informiert. Die Fahraufgabe muss dann in diesem sicheren Zustand an den Fahrer zurückgegeben werden. Es ist dabei nicht immer sichergestellt, dass das Fahrzeug ohne Einschränkungen weiter betrieben werden kann. Daher kann es erforderlich sein, nur noch einen eingeschränkten Fahrbetrieb zuzulassen, das Aufsuchen einer Werkstatt zu veranlassen oder gar den Fahrzeugstillstand herbeizuführen. Demnach wird eine Deaktivierung eines autonomen Fahrbetriebs veranlasst.

Ein weiteres Verfahren zur Steuerung des Betriebs eines vollautomatischen, zur unabhängigen Fahrzeugführung ausgebildeten Fahrerassistenzsystems eines Kraftfahrzeugs ist aus der Druckschrift DE 10 2009 050 399 A1 bekannt, bei welchem bei Eintritt wenigstens einer Übernahmebedingung eine Fahrerübemahmeaufforderung ausgegeben wird, welche bei Fahrübernahme durch den Fahrer, insbesondere durch Betätigung des Lenkrads und/oder der Pedalerie und/oder eines Schalters, zum Deaktivieren des Fahrerassistenzsystems führt, wobei bei Eintritt einer Übernahmebedingung ein wenigstens einen zur Überführung des Kraftfahrzeugs in einen sicheren Zustand, insbesondere den Stillstand, dienender Fahreingriff und insbesondere auch eine Fahrerübernahmeaufforderung umfassender Aktionsplan, der einen zeitlichen Ablauf von Steuerungsbefehlen für Fahrzeugsysteme enthält, ausgeführt wird.

Das durch das geforderte Abstellen bewirkte Liegenbleiben des Fahrzeugs ist für den Fahrer sehr unangenehm und kann seine Sicherheit gefährden.

Es ist daher Aufgabe der vorliegenden Erfindung, bei einem Fahrzeug gemäß dem Oberbegriff des Anspruchs 1 und einem Verfahren zum Steuern eines Fahrzeugs gemäß dem Oberbegriff des Anspruchs 7 die Verfügbarkeit des Fahrzeugs sowie eine Mindestfahrbereitschaft möglichst hoch zu halten.

Diese Aufgabe wird durch ein Fahrzeug gemäß Anspruch 1 sowie ein Verfahren zum Steuern eines Fahrzeugs gemäß Anspruch 7 gelöst. Weitere Ausführungsformen sind in den Unteransprüchen beschrieben.

Die Erfindung schlägt gemäß einem ersten Aspekt ein Fahrzeug vor, umfassend
- wenigstens ein Bewegungssystem, das die Bewegung des Fahrzeugs beeinflussen und in einem Normalmodus und wenigstens einem Notlaufmodus arbeiten kann;
- einen Verfügbarkeitskoordinator, der an jedes Bewegungssystem gekoppelt ist;
- ein Steuersystem für autonomes Fahren;
wobei der Verfügbarkeitskoordinator derart ausgebildet ist, dass er
- die Verfügbarkeit jedes Bewegungssystems überwacht;
- in Abhängigkeit von wenigstens einer der Verfügbarkeiten jedem Bewegungssystem vorgibt, ob es in seinem Normalmodus oder einem seiner Notlaufmodi arbeiten soll;
- in Abhängigkeit von wenigstens einer der Verfügbarkeiten bei eingeschänkter Vefügbarkeit oder Ausfall das Steuersystem aktiviert.

Aus dem Stand der Technik ist bekannt, das Steuersystem für autonomes Fahren in Abhängigkeit von wenigstens einer der Verfügbarkeiten zu deaktivieren.

Der Verfügbarkeitskoordinator kann also, falls beispielsweise die Verfügbarkeit eines Bewegungssystems eine eingeschränkte Funktionsfähigkeit oder gar den Ausfall dieses Bewegungssystems anzeigt, durch geeignete Auswahl und Vorgabe eines Notlaufmodus dieses Bewegungssystems und/oder eines Notlaufmodus eines der anderen Bewegungssysteme die Verfügbarkeit und Fahrbereitschaft des Fahrzeugs optimieren, sodass in Abhängigkeit von der Schwere des aufgetretenen Fehlers über geeignete Ersatzreaktionen auf Fahrzeugebene das sichere Führen des Fahrzeugs gewährleistet werden kann. Außerdem kann der Verfügbarkeitskoordinator bei Bedarf, falls beispielsweise die Verfügbarkeiten besonders schwerwiegende Fehler, die bei den bekannten Fahrzeugen zu einem Liegenbleiben führen würden, anzeigen, das Steuersystem für autonomes Fahren aktivieren, sodass die Anfahrt beispielsweise zur nächsten Werkstatt oder zur nächsten Tankstelle oder zu einem sicheren Nothalteplatz ermöglicht wird.

Der Verfügbarkeitskoordinator kann nach Bedarf auf beliebige Art und Weise ausgebildet sein, beispielsweise als Kombiinstrument mit Kontrollleuchten und Mikro-controller, das an einen Datenbus des Kraftfahrzeugs, beispielsweise einen CAN-Bus oder FlexRay-Bus, gekoppelt ist.

Das Steuersystem kann nach Bedarf auf beliebige Art und Weise ausgebildet sein und beispielsweise an einen Datenbus des Kraftfahrzeugs, beispielsweise einen CAN-Bus oder FlexRay-Bus, gekoppelt sein.

Jedes Bewegungssystem kann nach Bedarf auf beliebige Art und Weise ausgebildet sein, beispielsweise derart, dass es die Längsdynamik und/oder die Querdynamik des Fahrzeugs beeinflussen kann, und/oder beispielsweise wenigstens einen Antrieb und/oder wenigstens eine Bremse und/oder wenigstens eine Lenkung umfassen.

Bevorzugt ist das Steuersystem an jedes Bewegungssystem gekoppelt, bevorzugt über einen Datenbus des Kraftfahrzeugs, beispielsweise einen CAN-Bus oder FlexRay-Bus. Somit kann das Steuersystem, wenn es aktiviert ist, das autonome Fahren durch geeignetes Ansteuern der Bewegungssysteme ausführen.

Es kann vorgesehen sein, dass das Steuersystem in einem Normalmodus und wenigstens einem Notlaufmodus arbeiten kann, und dass der Verfügbarkeitskoordinator derart ausgebildet ist, dass er die Verfügbarkeit des Steuersystems überwacht und in Abhängigkeit von wenigstens einer der Verfügbarkeiten dem Steuersystem vorgibt, ob es in seinem Normalmodus oder einem seiner Notlaufmodi arbeiten soll.

Einer dieser Notlaufmodi kann beispielsweise für den Ausfall des Steuersystems vorgesehen sein und dann bevorzugt umfassen, dass dieser Ausfall durch den Verfügbarkeitskoordinator, beispielsweise mittels einer Kontrollleuchte eines Kombiinstruments, dem Fahrer angezeigt wird, damit er das Fahrzeug in einer Werkstatt reparieren lassen kann.

Jedes der vorgeschlagenen Fahrzeuge kann bevorzugt weiter wenigstens ein Funktionssystem umfassen, das eine Funktion des Fahrzeugs, die nicht die Bewegung des Fahrzeugs ist, beeinflussen und in einem Normalmodus und wenigstens einem Notlaufmodus arbeiten kann, wobei der Verfügbarkeitskoordinator an jedes Funktionssystem gekoppelt ist und derart ausgebildet ist, dass er die Verfügbarkeit jedes Funktionssystems überwacht und in Abhängigkeit von wenigstens einer der Verfügbarkeiten jedem Funktionssystem vorgibt, ob es in seinem Normalmodus oder einem seiner Notlaufmodi arbeiten soll.

Die Verfügbarkeiten, die für das Vorgeben der Modi der Bewegungssysteme, des Steuersystems und der Funktionssysteme verwendet werden können, können sowohl die Verfügbarkeiten der Bewegungssysteme und des Steuersystems als auch die Verfügbarkeiten der Funktionssysteme umfassen.

Jedes Funktionssystem kann nach Bedarf auf beliebige Art und Weise ausgebildet sein und beispielsweise wenigstens eine Mobiltelefonanlage und/oder wenigstens ein Navigationssystem und/oder wenigstens eine Warnblinkanlage umfassen.

Bevorzugt ist das Steuersystem an jedes Funktionssystem gekoppelt, bevorzugt über einen Datenbus des Kraftfahrzeugs, beispielsweise einen CAN-Bus oder FlexRay-Bus. Somit kann das Steuersystem, wenn es aktiviert ist, beispielsweise auf das Navigationssystem zugreifen, um die Route zur nächsten Werkstatt oder zur nächsten Tankstelle oder zu einem sicheren Nothalteplatz zu ermitteln und das autonome Fahren entsprechend dieser Route auszuführen, über die Mobiltelefonanlage einen automatischen Notruf an einen geeigneten Empfänger senden und automatisch die Warnblinkanlage einschalten.

Es kann vorgesehen sein, dass der Verfügbarkeitskoordinator derart ausgebildet ist, dass er eine Fehlfunktion des Steuersystems meldet. Somit kann der Verfügbarkeitskoordinator einen Ausfall des Steuersystems melden, beispielsweise mittels einer geeigneten Kontrollleuchte eines Kombiinstruments.

Die Erfindung schlägt gemäß einem zweiten Aspekt ein Verfahren zum Steuern eines Fahrzeugs vor, wobei das Fahrzeug umfasst:
- wenigstens ein Bewegungssystem, das die Bewegung des Fahrzeugs beeinflussen und in einem Normalmodus und wenigstens einem Notlaufmodus arbeiten kann;
- ein Steuersystem für autonomes Fahren;
und wobei
- die Verfügbarkeit jedes Bewegungssystems überwacht wird;
- in Abhängigkeit von wenigstens einer der Verfügbarkeiten jedem Bewegungssystem vorgegeben wird, ob es in seinem Normalmodus oder einem seiner Notlaufmodi arbeiten soll;
- in Abhängigkeit von wenigstens einer der Verfügbarkeiten bei eingeschränkter Vefügbarkeit oder Ausfall das Steuersystem aktiviert wird.

Aus dem Stand der Technik ist bekannt, dass das Steuersystem für autonomes Fahren in Abhängigkeit von wenigstens einer der Verfügbarkeiten deaktiviert wird.

Das Fahrzeug kann nach Bedarf auf beliebige Art und Weise ausgebildet sein, beispielsweise wie eines der vorgeschlagenen Fahrzeuge.

Es kann vorgesehen sein, dass das Steuersystem in einem Normalmodus und wenigstens einem Notlaufmodus arbeiten kann, dass die Verfügbarkeit des Steuersystems überwacht wird, und dass in Abhängigkeit von wenigstens einer der Verfügbarkeiten dem Steuersystem vorgegeben wird, ob es in seinem Normalmodus oder einem seiner Notlaufmodi arbeiten soll.

Es kann vorgesehen sein, dass das Fahrzeug weiter wenigstens ein Funktionssystem, das eine Funktion des Fahrzeugs, die nicht die Bewegung des Fahrzeugs ist, beeinflussen und in einem Normalmodus und wenigstens einem Notlaufmodus arbeiten kann, umfasst, dass die Verfügbarkeit jedes Funktionssystems überwacht wird, und dass in Abhängigkeit von wenigstens einer der Verfügbarkeiten jedem Funktionssystem vorgegeben wird, ob es in seinem Normalmodus oder einem seiner Notlaufmodi arbeiten soll.

Vorzugsweise wird eine Fehlfunktion des Steuersystems gemeldet. Dieses Melden erfolgt bevorzugt durch Anzeige mittels einer geeigneten Kontrollleuchte in einem Kombiinstrument.

Es kann vorgesehen sein, dass das Fahrzeug weiter einen Verfügbarkeitskoordinator umfasst, der die Verfügbarkeiten überwacht, und dass eine Fehlfunktion des Verfügbarkeitskoordinators gemeldet wird. Das Melden einer Fehlfunktion des Verfügbarkeitskoordinators kann nach Bedarf auf beliebige Art und Weise erfolgen, beispielsweise durch Anzeige mittels einer geeigneten Kontrollleuchte in einem Kombiinstrument.

Die Ausführungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert werden. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

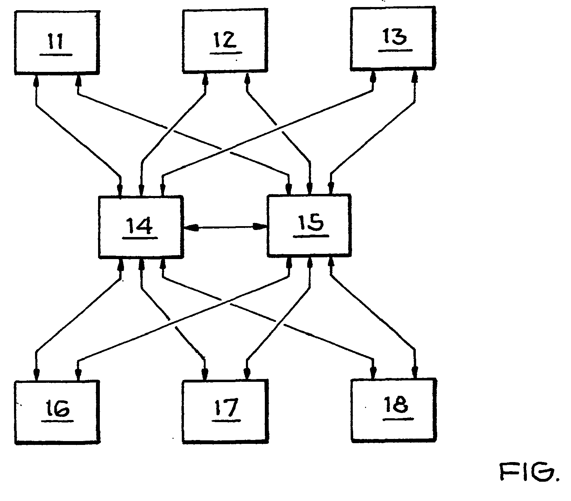

Die Zeichnung zeigt in der einzigen Figur ein Blockdiagramm eines Teils eines Fahrzeugs in einer bevorzugten Ausführungsform.

In der Figur ist ein Teil eines erfindungsgemäßen Fahrzeugs 10 in einer bevorzugten Ausführungsform schematisch dargestellt. Dieses Fahrzeug 10 umfasst drei Bewegungssysteme in Gestalt eines Antriebs 11, einer Bremse 12 und einer Lenkung 13, einen Verfügbarkeitskoordinator 14 in Gestalt eines Kombiinstruments, ein Steuersystem 15 für autonomes Fahren und drei Funktionssysteme in Gestalt einer Mobiltelefonanlage 16, eines Navigationssystems 17 und einer Warnblinkanlage 18.

Jedes Bewegungssystem 11, 12, 13 kann die Bewegung des Fahrzeugs 10 beeinflussen und in einem Normalmodus und wenigstens einem Notlaufmodus arbeiten.

Jedes Funktionssystem 16, 17, 18 kann eine Funktion des Fahrzeugs 10, die nicht die Bewegung des Fahrzeugs 10 ist, beeinflussen und in einem Normalmodus und wenigstens einem Notlaufmodus arbeiten.

Das Steuersystem 15 ist an jedes Bewegungssystem 11, 12, 13 und jedes Funktionssystem 16, 17, 18 gekoppelt und kann in einem Normalmodus und wenigstens einem Notlaufmodus arbeiten.

Der Verfügbarkeitskoordinator 14 ist an jedes Bewegungssystem 11, 12, 13, das Steuersystem 15 und jedes Funktionssystem 16, 17, 18 gekoppelt und derart ausgebildet, dass er die Verfügbarkeit jedes Bewegungssystems 11, 12, 13, des Steuersystems 15 und jedes Funktionssystems 16, 17, 18 überwacht. Der Verfügbarkeitskoordinator 14 ist außerdem derart ausgebildet, dass er in Abhängigkeit von wenigstens einer der Verfügbarkeiten jedem Bewegungssystem 11, 12, 13, dem Steuersystem 15 und jedem Funktionssystem 16, 17, 18 vorgibt, ob es in seinem Normalmodus oder einem seiner Notlaufmodi arbeiten soll. Darüber hinaus ist der Verfügbarkeitskoordinator 14 derart ausgebildet, dass er in Abhängigkeit von wenigstens einer der Verfügbarkeiten das Steuersystem 15 aktiviert oder deaktiviert.

Bei dieser bevorzugten Ausführungsform wird der Verfügbarkeitskoordinator 14 durch ein Kombiinstrument gebildet, das eine Kontrollleuchte (nicht dargestellt) umfasst und eine Fehlfunktion des Steuersystems 15 mittels dieser Kontrollleuchte dem Fahrer meldet.

Im Folgenden werden nun die Funktionsweise des Fahrzeugs 10 sowie ein erfindungsgemäßes Verfahren zum Steuern des Fahrzeugs 10 an einem Fallbeispiel erläutert. In diesem Fallbeispiel ist die Verfügbarkeit der Lenkung 13, die hier als Elektrolenkung ausgebildet ist, dahingehend eingeschränkt, dass die sensorische Erfassung der Lenkradbewegungen ausgefallen ist.

Diese Verfügbarkeit erkennt der Verfügbarkeitskoordinator 14 beziehungsweise wird von der Lenkung 13 an ihn gemeldet, woraufhin er eine Kontrollleuchte im Kombiinstrument aktiviert, das Steuersystem 15 aktiviert und der Lenkung 13 vorgibt, dass sie in einem Notlaufmodus arbeiten soll. Dieser Notlaufmodus sieht vor, dass die Lenkung 13 nicht mehr auf die Sensorerfassung der Lenkradbewegungen reagieren darf, da die entsprechenden Sensorsignale möglicherweise fehlerhaft sind, und stattdessen nun von dem aktivierten Steuersystem 15 für autonomes Fahren gesteuert wird. Das aktivierte Steuersystem 15 steuert also die Lenkung 13 und fährt das Fahrzeug 10 autonom zu dem nächsten sicheren Nothalteplatz, den es unter Verwendung des Navigationssystems 17 ansteuert. Für das autonome Fahren nutzt das Steuersystem 15 außerdem den Antrieb 11 und die Bremse 12 durch geeignetes Ansteuern.

Außerdem gibt der Verfügbarkeitskoordinator 14 der Mobiltelefonanlage 16 einen Notlaufmodus vor, in dem sie einen automatischen Notruf an die nächstgelegene Werkstatt sendet, die er mithilfe des Navigationssystems 17 ausfindig gemacht hat, gibt der Warnblinkanlage 18 einen Notlaufmodus vor, in dem sie eingeschaltet wird, und gibt dem Antrieb 11 einen Notlaufmodus vor, in dem dieser die Fahrzeuggeschwindigkeit auf einen bestimmten Maximalwert begrenzt.

## Patentansprüche

1. Fahrzeug (10), umfassend
- wenigstens ein Bewegungssystem (11, 12, 13), das die Bewegung des Fahrzeugs (10) beeinflussen und in einem Normalmodus und wenigstens einem Notlaufmodus arbeiten kann;
- einen Verfügbarkeitskoordinator (14), der an jedes Bewegungssystem (11, 12, 13) gekoppelt ist;
wobei
- der Verfügbarkeitskoordinator (14) derart ausgebildet ist, dass er
• die Verfügbarkeit jedes Bewegungssystems (11, 12, 13) überwacht;
**gekennzeichnet durch**
- ein Steuersystem (15) für autonomes Fahren;
wobei
- der Verfügbarkeitskoordinator (14) an das Steuersystem (15) gekoppelt ist und derart ausgebildet ist, dass er
• in Abhängigkeit von wenigstens einer der Verfügbarkeiten jedem Bewegungssystem (11, 12, 13) vorgibt, ob es in seinem Normalmodus oder einem seiner Notlaufmodi arbeiten soll;
• in Abhängigkeit von wenigstens einer der Verfügbarkeiten bei eingeschränkter Funktionsfähigkeit oder Ausfall das Steuersystem (15) aktiviert.

2. Fahrzeug (10) nach Anspruch 1, wobei
- wenigstens eines der Bewegungssysteme wenigstens einen Antrieb (11) und/oder wenigstens eine Bremse (12) und/oder wenigstens eine Lenkung (13) umfasst.

3. Fahrzeug (10) nach einem der vorherigen Ansprüche, wobei
- das Steuersystem (15) in einem Normalmodus und wenigstens einem Notlaufmodus arbeiten kann;
- der Verfügbarkeitskoordinator (14)derart ausgebildet ist, dass er
• die Verfügbarkeit des Steuersystems (15) überwacht;
• in Abhängigkeit von wenigstens einer der Verfügbarkeiten dem Steuersystem (15) vorgibt, ob es in seinem Normalmodus oder einem seiner Notlaufmodi arbeiten soll.

4. Fahrzeug (10) nach einem der vorherigen Ansprüche, weiter umfassend
- wenigstens ein Funktionssystem (16, 17, 18), das eine Funktion des Fahrzeugs (10), die nicht die Bewegung des Fahrzeugs (10) ist, beeinflussen und in einem Normalmodus und wenigstens einem Notlaufmodus arbeiten kann;
wobei
- der Verfügbarkeitskoordinator (14) an jedes Funktionssystem (16, 17, 18) gekoppelt ist und derart ausgebildet ist, dass er
• die Verfügbarkeit jedes Funktionssystems (16, 17, 18) überwacht;
• in Abhängigkeit von wenigstens einer der Verfügbarkeiten jedem Funktionssystem (16, 17, 18) vorgibt, ob es in seinem Normalmodus oder einem seiner Notlaufmodi arbeiten soll.

5. Fahrzeug (10) nach Anspruch 4, wobei
- wenigstens eines der Funktionssysteme wenigstens eine Mobiltelefonanlage (16) und/oder wenigstens ein Navigationssystem (17) und/oder wenigstens eine Warnblinkanlage (18) umfasst.

6. Fahrzeug (10) nach einem der vorherigen Ansprüche, wobei
- der Verfügbarkeitskoordinator (14) derart ausgebildet ist, dass er
• eine Fehlfunktion des Steuersystems (15) meldet.

7. Verfahren zum Steuern eines Fahrzeugs (10), wobei das Fahrzeug (10) umfasst
- wenigstens ein Bewegungssystem (11, 12, 13), das die Bewegung des Fahrzeugs (10) beeinflussen und in einem Normalmodus und wenigstens einem Notlaufmodus arbeiten kann;
und wobei
- die Verfügbarkeit jedes Bewegungssystems (11, 12, 13) überwacht wird; **dadurch gekennzeichnet, dass**
- das Fahrzeug (10) weiter umfasst ein Steuersystem (15) für autonomes Fahren;
- in Abhängigkeit von wenigstens einer der Verfügbarkeiten jedem Bewegungssystem (11, 12, 13) vorgegeben wird, ob es in seinem Normalmodus oder einem seiner Notlaufmodi arbeiten soll;
- in Abhängigkeit von wenigstens einer der Verfügbarkeiten bei eingeschränkter Funktionsfähigkeit oder Ausfall das Steuersystem (15) aktiviert wird.

8. Verfahren nach Anspruch 7, wobei
- das Steuersystem (15) in einem Normalmodus und wenigstens einem Notlaufmodus arbeiten kann;
- die Verfügbarkeit des Steuersystems (15) überwacht wird;
- in Abhängigkeit von wenigstens einer der Verfügbarkeiten dem Steuersystem (15) vorgegeben wird, ob es in seinem Normalmodus oder einem seiner Notlaufmodi arbeiten soll.

9. Verfahren nach Anspruch 7 oder 8, wobei das Fahrzeug (10) weiter umfasst
- wenigstens ein Funktionssystem (16, 17, 18), das eine Funktion des Fahrzeugs (10), die nicht die Bewegung des Fahrzeugs (10) ist, beeinflussen und in einem Normalmodus und wenigstens einem Notlaufmodus arbeiten kann;
und wobei
- die Verfügbarkeit jedes Funktionssystems (16, 17, 18) überwacht wird;
- in Abhängigkeit von wenigstens einer der Verfügbarkeiten jedem Funktionssystem (16, 17, 18) vorgegeben wird, ob es in seinem Normalmodus oder einem seiner Notlaufmodi arbeiten soll.

10. Verfahren nach einem der Ansprüche 7 bis 9, wobei
- eine Fehlfunktion des Steuersystems (15) gemeldet wird.

11. Verfahren nach einem der Ansprüche 7 bis 10, wobei das Fahrzeug (10) weiter umfasst
- einen Verfügbarkeitskoordinator (14), der die Verfügbarkeiten überwacht;
und wobei
- eine Fehlfunktion des Verfügbarkeitskoordinators (14) gemeldet wird.

## Claims

1. Vehicle (10) comprising
- at least a motion system (11, 12, 13) which can influence the movement of the vehicle (10) and can operate in a normal mode and at least one emergency mode;
- an availability coordinator (14) coupled to each motion system (11, 12, 13);
wherein
- the availability coordinator (14) is designed such that
-- it monitors the availability of each movement system (11, 12, 13) ;
**characterized by**
- a control system (15) for autonomous driving; wherein
- the availability coordinator (14) is coupled to the control system (15) and is designed such that it
-- in dependence on at least one of the availabilities of each motion system (11, 12, 13) specifies whether to operate in its normal mode or one of its emergency modes;
-- in dependence on at least one of the availabilities on impaired functioning or failure enables the control system (15).

2. Vehicle (10) according to claim 1, wherein
- at least one of the motion systems comprises at least one drive (11) and/or at least one brake (12) and/or at least one steering system (13).

3. Vehicle (10) according to one of the preceding claims, wherein
- the control system (15) can operate in a normal mode and at least one emergency mode;
- the availability coordinator (14) is designed so that it
-- monitors the availability of the control system (15) ;
-- in dependence on at least one of the availabilities of the control system (15) specifies whether to operate in its normal mode or one of its emergency modes.

4. Vehicle (10) according to one of the preceding claims, further comprising
- at least one functional system (16, 17, 18) which can affect a function of the vehicle (10), which is not the motion of the vehicle (10), and operate in a normal mode and at least one emergency mode;
wherein
- the availability coordinator (14) is coupled to each functional system (16, 17, 18) and is designed so that it
-- monitors the availability of each functional system (16, 17, 18);
-- in dependence on at least one of the availabilities of each functional system (16, 17, 18) specifies whether to operate in its normal mode or one of its emergency modes.

5. Vehicle (10) according to claim 4, wherein
- at least one of the functional systems comprises at least one mobile telephone system (16) and/or at least one navigation system (17) and/or at least one hazard warning system (18).

6. Vehicle (10) according to one of the preceding claims, wherein
- the availability coordinator (14) is designed in such that it
-- can report a malfunction of the control system (15).

7. A process for controlling a vehicle (10) wherein the vehicle (10) comprises
- at least a motion system (11, 12, 13) which can influence the movement of the vehicle (10) and can operate in a normal mode and at least one emergency mode;
and wherein
- the availability of each motion system (11, 12, 13) is monitored;
**characterized in that**
- the vehicle (10) further comprises a control system (15) for autonomous driving;
- in dependence on at least one of the availabilities of each motion system (11, 12, 13) specifies whether to operate in its normal mode or one of its emergency modes;
- in dependence on at least one of the availabilities on impaired functioning or failure enables the control system (15).

8. Process according to claim 7, wherein
- the control system (15) can operate in a normal mode and at least one emergency mode;
- the availability of the control system (15) is monitored;
- in dependence on at least one of the availabilities of the control system (15) it is specified whether to operate in its normal mode or one of its emergency modes.

9. Process according to claim 7 or 8, wherein the vehicle (10) further comprises
- at least one functional system (16, 17, 18) which can affect a function of the vehicle (10), which is not the motion of the vehicle (10), and operate in a normal mode and at least one emergency mode;
and wherein
- the availability of each functional system (16, 17, 18) is monitored;
- in dependence on at least one of the availabilities of each functional system (16, 17, 18) it is specified whether to operate in its normal mode or one of its emergency modes.

10. Process according to any one of claims 7 to 9, wherein
- a malfunction of the control system (15) is reported.

11. Process according to any one of claims 7 to 10, wherein the vehicle (10) further comprises
- an availability coordinator (14) which monitors the availabilities;
and wherein
- a malfunction of the availability coordinator (14) is reported.

## Revendications

1. Véhicule (10), comprenant
- au moins un système de déplacement (11, 12, 13), qui exerce une incidence sur le déplacement du véhicule (10) et qui peut fonctionner dans un mode normal et au moins dans un mode d'urgence ;
- un coordinateur de disponibilité (14), qui est couplé à chaque système de déplacement (11, 12, 13) ;
dans lequel
- le coordinateur de disponibilité (14) est réalisé de telle manière qu'il
-- surveille la disponibilité de chaque système de déplacement (11, 12, 13) ;
**caractérisé par**
- un système de commande (15) pour une conduite autonome ;
dans lequel
- le coordinateur de disponibilité (14) est couplé au système de commande (15) et est réalisé de telle manière qu'il
-- spécifie à chaque système de déplacement (11, 12, 13) en fonction d'au moins une des disponibilités s'il doit fonctionner dans son mode normal ou dans l'un de ses modes d'urgence,
-- active le système de commande (15) en fonction d'au moins une des disponibilités en présence d'un fonctionnement limité ou d'une panne.

2. Véhicule (10) selon la revendication 1, dans lequel
- au moins un des systèmes de déplacement comprend au moins un entraînement (11) et/ou au moins un frein (12) et/ou au moins une direction (13).

3. Véhicule (10) selon l'une quelconque des revendications précédentes, dans lequel
- le système de commande (15) peut fonctionner dans un mode normal et au moins dans un mode d'urgence ;
- le coordinateur de disponibilité (14) est réalisé de telle manière qu'il
-- surveille la disponibilité du système de commande (15) ;
-- qu'il spécifie au système de commande (15) en fonction d'au moins une des disponibilités s'il doit fonctionner dans son mode normal ou dans l'un de ses modes d'urgence.

4. Véhicule (10) selon l'une quelconque des revendications précédentes, comprenant en outre
- au moins un système fonctionnel (16, 17, 18), qui peut exercer une incidence sur une fonction du véhicule (10), qui n'est pas le déplacement du véhicule (10) et qui peut fonctionner dans un mode normal et au moins dans un mode d'urgence ;
dans lequel
- le coordinateur de disponibilité (14) est couplé à chaque système fonctionnel (16, 17, 18) et est réalisé de telle manière qu'il
-- surveille la disponibilité de chaque système fonctionnel (16, 17, 18) ;
-- spécifie à chaque système fonctionnel (16, 17, 18) en fonction d'au moins une des disponibilités s'il doit fonctionner dans son mode normal ou dans l'un de ses modes d'urgence.

5. Véhicule (10) selon la revendication 4, dans lequel
- au moins un des systèmes fonctionnels comprend au moins un équipement de téléphone mobile (16) et/ou au moins un système de navigation (17) et/ou au moins un équipement de clignotement de détresse (18).

6. Véhicule (10) selon l'une quelconque des revendications précédentes, dans lequel
- le coordinateur de disponibilité (14) est réalisé de telle manière qu'il
-- notifie un dysfonctionnement du système de commande (15).

7. Procédé servant à commander un véhicule (10), dans lequel le véhicule (10) comprend
- au moins un système de déplacement (11, 12, 13), qui peut exercer une incidence sur le déplacement du véhicule (10) et qui peut fonctionner dans un mode normal et au moins dans un mode d'urgence ;
et dans lequel
- la disponibilité de chaque système de déplacement (11, 12, 13) est surveillée ;
**caractérisé en ce**
- **que** le véhicule (10) comprend en outre un système de commande (15) pour une conduite autonome ;
- **que** chaque système de déplacement (11, 12, 13) se voit indiquer en fonction d'au moins une des disponibilités s'il doit fonctionner dans son mode normal ou dans l'un de ses modes d'urgence ;
- **que** le système de commande (15) est activé en fonction au moins d'une des disponibilités en présence d'un fonctionnement limité ou en présence d'une panne.

8. Procédé selon la revendication 7, dans lequel
- le système de commande (15) peut fonctionner dans un mode normal et au moins dans un mode d'urgence ;
- la disponibilité du système de commande (15) est surveillée ;
- le système de commande (15) se voit indiquer en fonction au moins d'une des disponibilités s'il doit fonctionner dans son mode normal ou dans l'un de ses modes d'urgence.

9. Procédé selon la revendication 7 ou 8, dans lequel le véhicule (10) comprend en outre
- au moins un système fonctionnel (16, 17, 18), qui peut exercer une influence sur une fonction du véhicule (10), qui n'est pas le déplacement du véhicule (10) et qui peut fonctionner dans un mode normal et au moins dans un mode d'urgence ;
et dans lequel
- la disponibilité de chaque système fonctionnel (16, 17, 18) est surveillée ;
- chaque système fonctionnel (16, 17, 18) se voit indiquer en fonction au moins d'une des disponibilités s'il doit fonctionner dans son mode normal ou dans l'un de ses modes d'urgence.

10. Procédé selon l'une quelconque des revendications 7 à 9, dans lequel
- un dysfonctionnement du système de commande (15) est notifié.

11. Procédé selon l'une quelconque des revendications 7 à 10, dans lequel le véhicule (10) comprend en outre
- un coordinateur de disponibilité (14) qui surveille les disponibilités ;
et dans lequel
- un dysfonctionnement du coordinateur de disponibilité (14) est notifié.
